# EUROPÄISCHE PATENTSCHRIFT

(11) **EP 1 529 968 B1**
(45) Veröffentlichungstag und Bekanntmachung des Hinweises auf die Patenterteilung: **19.04.2006**
(21) Anmeldenummer: 04021517.0
(22) Anmeldetag: 10.09.2004
(51) Int. Cl.: F16B 37/04

(54) **Befestigungselement**
Fastening device
Elément de fixation

(30) Priorität: 04.11.2003 DE 10352126
(43) Veröffentlichungstag der Anmeldung: 11.05.2005
(73) Patentinhaber: Metallwarenfabrik Hermann Winker GmbH & Co. KG, 78549 Spaichingen (DE)
(72) Erfinder: Winker, Alexander, Dr., 78549 Spaichingen (DE)
(74) Vertreter: Lewandowsky, Klaus

(56) Entgegenhaltungen:
- FR-A- 1 403 611
- FR-A- 2 574 877
- FR-A- 2 699 235
- FR-A- 2 730 771
- GB-A- 661 221

## Beschreibung

Die vorliegende Erfindung betrifft ein Befestigungselement (FR 2 699 235).

Es sind Befestigungselemente in Form von sogenannten Käfigmuttern bekannt, bspw. aus der DE 94 09 087.4. Die dort beschriebene Käfigmutter stellt einen Teil einer Schrauben-Mutter-Verbindung dar, über die Bauteile miteinander verbunden werden. Zur Vereinfachung der Montage wird die Käfigmutter mittels einer Halterung im Bereich der für den Schraubenbolzen bestimmten Durchtrittsöffnung an einem Bauteil vormontiert, bspw. durch Elektroschweißen. Beim späteren Eindrehen des Schraubenbolzens in das Mutterngewinde bietet die Halterung eine drehfeste Abstützung für die Mutter. Gleichzeitig verhindert die Halterung ein Ausweichen der Mutter in axialer Richtung des Schraubenbolzens. Auf diese Weise lässt sich der Schraubenbolzen in die Mutter eindrehen, ohne dass diese von Hand bzw. unter Zuhilfenahme von Werkzeugen fixiert werden muss. Zur Ausgleich von Toleranzen oder nach der Montage auftretenden Spannungen wird die Mutter mit Spiel in der Halterung gehalten.

Dieses bekannte Befestigungselement ist sehr massiv, voluminös und aufwendig ausgeführt. Zur Aufnahme in die Halterung können keine Standardmuttern verwendet werden, sondern man benötigt eine speziell ausgebildete Mutter. Außerdem besteht die Gefahr eines elektrischen Kontaktes zwischen der Mutter und der Halterung. Dies kann insbesondere im Karosseriebau dazu führen, dass bspw. während einer Tauchlackierung die Mutter ganz oder teilweise mit Lack überzogen wird, was unerwünscht ist.

Die Aufgabe der vorliegenden Erfindung besteht demgemäß darin, ein derartiges Befestigungselement so auszubilden, dass es aus wenigen Bauteilen besteht, kostengünstig herstellbar und leicht montierbar sowie platzsparend ausgebildet ist. Es soll ferner zur Verwendung von Standardmuttern geeignet sein.

Die Lösung besteht in einem Befestigungselement mit den Merkmalen des Anspruchs 1. Erfindungsgemäß sind ein Träger und eine Aufnahme für einen Mutternkörper vorgesehen, wobei der Träger mindestens eine Auflagefläche für die Aufnahme und mindestens ein die Aufnahme übergreifendes Halteelement aufweist und wobei die Aufnahme mit Spiel vom Träger gehalten ist.

Das erfindungsgemäße Befestigungselement besteht lediglich aus zwei Bauteilen, die leicht und platzsparend ausgeführt und unverlierbar miteinander verbunden werden können. Die Aufnahme kann mit einer beliebig geformten Öffnung zum Einsetzen von Muttern aller Art, insbesondere Sechskant-Standardmuttern, versehen werden. Damit ist das erfindungsgemäße Befestigungselement vielseitig und auf kleinem Raum einsetzbar, und die Herstellung von speziell angepassten Muttern entfällt. Dies lässt auch eine wirtschaftliche Herstellung und Nutzung des erfindungsgemäßen Befestigungselementes zu. Ferner kann das erfindungsgemäße Befestigungselement vormontiert, ggf. auch mit bereits eingesetztem Mutternkörper, an den Montageort angeliefert werden.

Die Kombination aus Auflagefläche und die Aufnahme übergreifendem Halteelement bewirkt eine kippsichere Anordnung der Aufnahme im Träger, so dass zusätzliche Mittel zur Verhinderung einer Kippbewegung der Mutter beim Ansetzen und Eindrehen des Schraubenbolzens nicht notwendig sind. Zugleich ist die Aufnahme im Träger zumindest in der horizontalen Ebene, aber, wenn gewünscht, auch in vertikaler Richtung mit Spiel aufgenommen. Außerdem übertragt die Aufnahme beim Eindrehen des Schraubenbolzens das Drehmoment der Schraube und nimmt die Drehkräfte auf.

Gegenstand der vorliegenden Erfindung ist ferner ein derartiges Befestigungselement, in welchem ein Mutternkörper aufgenommen ist.

Vorteilhafte Weiterbildungen ergeben sich aus den Unteransprüchen.

Der Träger kann bspw. aus einem Metallwerkstoff bestehen, so dass er bspw. mittels Schweißen, bspw. Elektroschweißen oder Punktschweißen, an einem metallischen Bauteil angebracht werden kann. Der Träger kann aber auch aus jedem anderen geeigneten Material wie Kunststoff, Verbundwerkstoff etc. hergestellt sein und auf jede im Einzelfall geeignete Weise, wie bspw. mittels Kleb-, Steck-, Niet- oder Klemmverbindungen an einem Bauteil befestigt werden.

Die Aufnahme besteht vorzugsweise aus einem Kunststoffmaterial oder einem sonstigen elektrisch isolierenden Material. Damit wird ein elektrischer Kontakt zwischen der Mutter bzw. der Mutter-/Schrauben-Verbindung und dem Träger vermieden, da die Drehmomentübertragung über die Aufnahme und nicht über die Mutter selbst erfolgt. Infolgedessen wird bspw. während einer kathodischen Tauchlackierung ein Lackauftrag auf die Mutter vermieden. Besonders bevorzugt ist das Spiel der Aufnahme so bemessen, dass ein in die Aufnahme eingesetzter Mutternkörper einen den elektrischen Kontakt zwischen Mutternkörper und Träger verhindernden Abstand zum Träger aufweist. Ferner kann ein elektrischer Kontakt zwischen Mutternkörper und Bauteil dadurch verhindert werden, dass die Mutter in die Aufnahme eingeschoben ist und erst beim Anziehen des Mutternkörpers auf das Bauteil gezogen wird.

Selbstverständlich können auch andere Werkstoffe, einschließlich elektrisch leitender Werkstoffe, zur Herstellung der Aufnahme verwendet werden.

Eine bevorzugte Ausführungsform des erfindungsgemäßen Befestigungselements besteht darin, dass der Träger mindestens zwei Schenkel mit Auflageflächen für die Aufnahme aufweist, wobei die Schenkel über stegförmige Halteelemente miteinander verbunden sind. In diesem Fall ist die Aufnahme vorzugsweise mit Vorsprüngen versehen, die einerseits auf den Auflageflächen aufliegen und andererseits die stegförmigen Halteelemente untergreifen. Damit ist die Aufnahme kippsicher und im Träger horizontal bewegbar gehalten. Diese Ausführungsform kann sowohl rechteckig oder viereckig als auch rund, bspw. kreisrund, oval oder elliptisch ausgebildet sein.

Eine alternative Ausführungsform sieht vor, dass der Träger ringförmig ausgebildet und mit mindestens zwei sich radial nach innen erstreckenden Halteelementen versehen ist. Der Träger kann hierbei kreisringförmig, oval, elliptisch oder mehreckig ausgestaltet sein. Hierbei ist die Aufnahme vorzugsweise scheibenförmig ausgebildet, und ihre Kontur kann insbesondere an die Außenform des Trägers angepasst sein. Die Aufnahme weist korrespondierend zu den sich radial erstreckenden Halteelementen an ihrem Außenumfang Ausnehmungen auf, in welche die Halteelemente eingreifen. Auch diese Ausgestaltung ermöglicht eine kippsichere und horizontal bewegliche Verbindung der Aufnahme mit dem Träger.

Vorzugsweise ist der Abstand zwischen der mindestens einen Auflagefläche und dem mindestens einen Halteelement der Dicke der Aufnahme angepasst, so dass eine Kippbewegung der Aufnahme vollständig verhindert wird.

Die Aufnahme kann eine Öffnung aufweisen, die in Form und Größe dem Mutternkörper angepasst ist, derart, dass der Mutternkörper klemmend und bewegbar in der Aufnahme gehalten ist Damit ist das erfindungsgemäße Befestigungselement zur Verwendung mit allen denkbaren Muttertypen geeignet. Ferner wird ein Abstand zum Bauteil gewährleistet, der einen elektrischen Kontakt zwischen dem Mutternkörper und dem Bauteil vor der Montage verhindert. Bei der Montage wird der Mutternkörpern dann nach unten auf das Bauteil gezogen. Insbesondere kann die Öffnung rund, langlochförmig oder mehreckig, bspw. sechseckig ausgebildet sein.

In vorteilhafter Weise kann an der Innenfläche der Öffnung mindestens eine Materialerhöhung vorgesehen sein, die die Klemmung des Mutternkörpers unterstützt. Diese Materialerhöhung kann in Form einer Wölbung, eines Steges, eines Vorsprungs, einer Noppe o. dgl. ausgebildet sein. Die Materialerhöhung kann so bemessen sein, dass die Klemmkraft so hoch ist, dass Muttern ohne radialen Bund verwendet werden können und beim Eindrehen der Schraube nicht aus der Aufnahme herausgedrückt werden. Statt dessen können in an sich bekannter Weise am Mutternkörper Vorsprünge oder Materialverdickungen vorgesehen sein, die nach dem Einbringen der Mutter in die Aufnahme angebracht werden und ein Herausdrücken verhindern.

Anhand von in den beigefügten Figuren dargestellten Ausführungsbeispielen wird die Erfindung näher beschrieben. Es zeigen:
- Figur 1: eine perspektivische Ansicht einer ersten Ausführungsform eines Trägers für ein erfindungsgemäßen Befestigungselement in schematischer, nicht maßstabsgerechter Darstellung;
- Figur 2: eine perspektivische Ansicht einer ersten Ausführungsform einer Aufnahme für ein erfindungsgemäßen Befestigungselement in schematischer, nicht maßstabsgerechter Darstellung;
- Figur 3: einen Schnitt entlang der Linie III - III in Figur 1;
- Figur 4: die Darstellung gemäß Figur 3 mit der Aufnahme aus Figur 2;
- Figur 5: die Darstellung gemäß Figur 4, in Richtung des Pfeils E betrachtet;
- Figur 6: die Darstellung gemäß Figur 4 mit in die Aufnahme eingesetztem Mutternkörper;
- Figur 7: eine Draufsicht einer zweiten Ausführungsform des erfindungsgemäßen Befestigungselements, bestehend aus Träger und Aufnahme;
- Figur 8: das Befestigungselement aus Figur 7 in einer Seitenansicht.

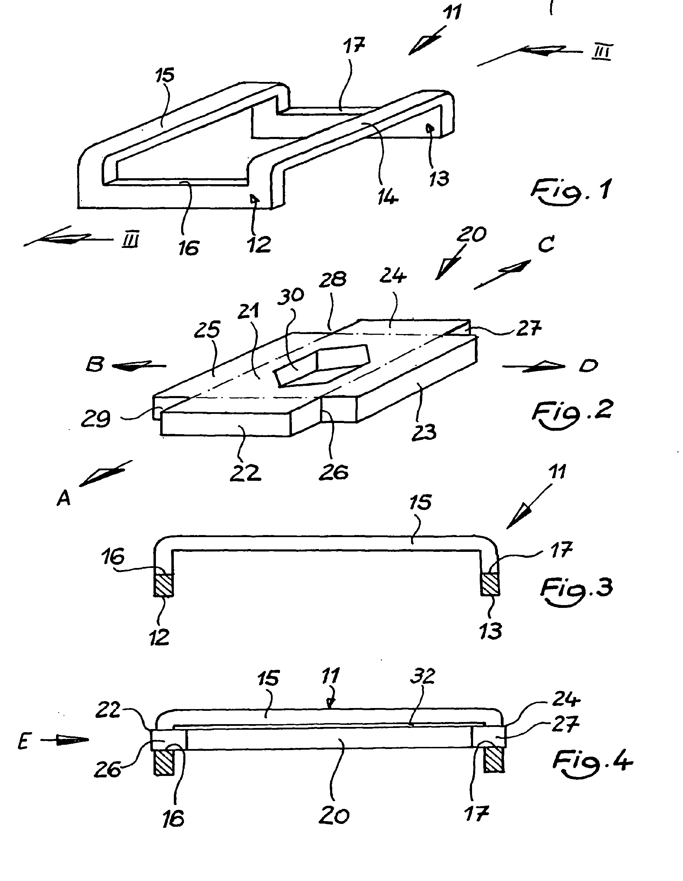

Das erfindungsgemäße Befestigungselement 10 besteht im Wesentlichen aus einem Träger und einer Aufnahme. Eine Ausführungsform eines Trägers 11 ist in den Figuren 1 und 3 dargestellt. Dieser Träger 11 ist U-Bügel-förmig geformt und weist zwei Schenkel 12, 13 auf, die mittels stegförmiger Halteelemente 14, 15 miteinander verbunden sind. Jeder Schenkel 12, 13 weist eine Auflagefläche 16, 17 auf, wobei die Auflageflächen 16, 17 mit Abstand zu den Halteelementen 14, 15 angeordnet sind. Der Träger 11 besteht vorzugsweise aus einem metallischen Werkstoff, bspw. Stahl.

In der Figur 2 ist ein Ausführungsbeispiel einer Aufnahme 20 dargestellt. Die Auflage 20 weist einen durch strichpunktierte Linien angedeuteten Grundkörper 21 auf, der im Ausführungsbeispiel rechteckig gestaltet ist. Entlang aller vier Seiten des Grundkörpers 21 sind im Ausführungsbeispiel quaderförmige Vorsprünge 22, 23, 24, 25 angeformt. Durch die Anordnung dieser Vorsprünge 22, 23, 24, 25 am Grundkörper 21 werden Ausnehmungen 26, 27, 28, 29 gebildet. Beim Ausführungsbeispiel ist ferner in der Mitte des Grundkörpers 21 eine Öffnung 30 ausgebildet, die eine sechseckige Form hat. Die Aufnahme 20 besteht vorzugsweise aus einem nicht elektrisch leitenden Werkstoff, bspw. einem Kunststoffmaterial.

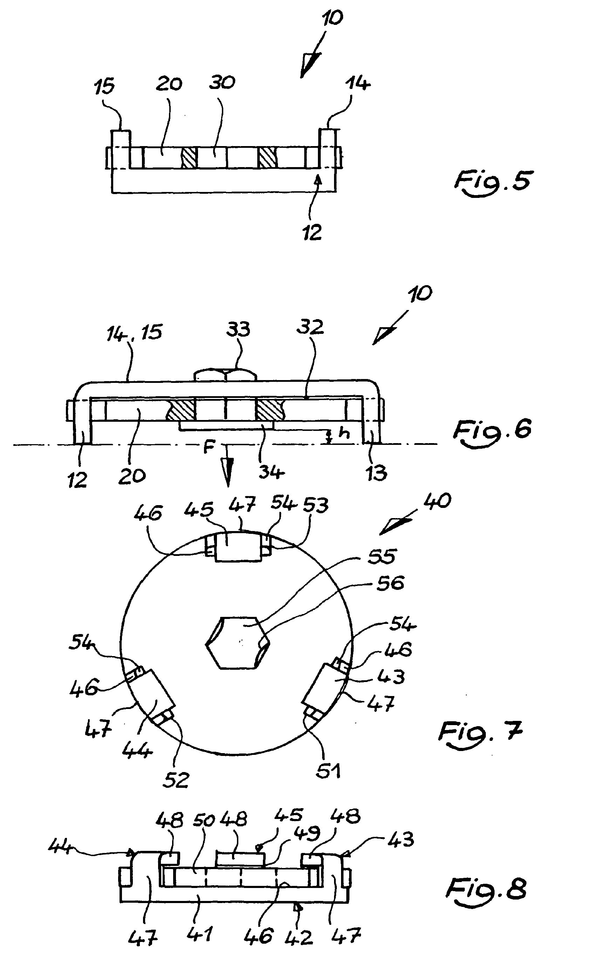

Aus den Figuren 4 und 5 ist ersichtlich, wie der Träger 11 und die Aufnahme 20 zu dem erfindungsgemäßen Befestigungselement 10 zusammengesetzt sind. Die Aufnahme 20 liegt mit den Vorsprüngen 22 und 24 auf den Auflageflächen 16 und 17 des Trägers 11 auf, während die Halteelemente 14 und 15 des Trägers 11 die Vorsprünge 23 und 25 der Aufnahme 20 übergreifen. Dabei ist zwischen der Oberseite der Aufnahme 20 und der Unterseite der Halteelemente 14, 15 ein Zwischenraum 32 belassen. Auf diese Weise kann sich die Aufnahme 20 in Richtung der Pfeile A, B, C, D in Figur 2 im Träger 20 horizontal bewegen. Die Ausnehmungen 26, 27, 28, 29 bzw. ihre Stirnflächen stellen Anschlagschultern da, die an den vertikalen Bereichen der Schenkel 12, 13 zur Anlage kommen und so das Ausmaß der horizontalen Bewegung der Aufnahme 20 im Träger 11 begrenzen. Dabei sind der Träger 11 und die Aufnahme 20 in ihren Abmessungen so aufeinander abgestimmt, dass bei der horizontalen Bewegung ein in die Aufnahme 20 eingesetzter Mutternkörper 33 (vgl. Figur 6) den Träger 11 nicht berührt.

Der Zwischenraum 32 kann aber auch, wenn gewünscht, so bemessen sein, dass eine vertikale Bewegung der Aufnahme 20 im Träger 11 möglich ist, ohne dass beim Ansetzen und Eindrehen des Schraubenbolzens eine Kippbewegung stattfindet.

Figur 6 zeigt das Befestigungselement 10 mit eingesetztem Mutternkörper 33, wobei die Oberfläche eines Bauteils strichpunktiert angedeutet ist. Im Ausführungsbeispiel handelt es sich um eine Standard-Sechskantmutter mit einem Bund 34. Der Mutternkörper 33 ist klemmend und axial bewegbar in der Aufnahme 20 gehalten. Er weist vor der Montage einen Abstand h zur Oberfläche des Bauteils auf. Dadurch wird ein elektrischer Kontakt zwischen dem Mutternkörper und dem Bauteil vor der Montage verhindert.

Die in Figur 6 gezeigte Einheit aus Befestigungselement 10 und Mutternkörper 33 dient zur Verbindung zweier oder mehrerer Bauteile, bspw. in Kraftfahrzeugen. Das Befestigungselement 10 wird zunächst mit der Unterseite seiner Schenkel 12, 13 über einer Bohrung an einem Bauteil bspw. durch Schweißen, Kleben, Einstecken, Klemmen o. dgl. fixiert. Anschließend werden ein oder mehrere weitere Bauteile so ausgerichtet, dass ihre Bohrungen fluchten und der Schraubenbolzen von der dem Befestigungselement 10 abgewandten Seite in den Mutternkörper 33 eingedreht. Sobald der Schraubenkopf des Schraubenbolzens auf dem jenseitigen Bauteil anliegt, so führt die Fortsetzung der Drehbewegung des Schraubenbolzens dazu, dass der Mutternkörper in Richtung des Pfeiles F auf die Oberfläche des diesseitigen Bauteils gezogen wird. Die horizontale Bewegbarkeit der Aufnahme 20 bzw. des Mutternkörpers 33 dient dazu, bei auf dem Bauteil fixiertem Befestigungselement 10 Lagetoleranzen zwischen dem Mutternkörper und den Bohrungen auszugleichen.

Das Befestigungselement 10 kann bspw. dadurch hergestellt werden, dass der Träger 11 als flaches Bauteil bspw. ausgestanzt und die Aufnahme 20 bspw. als Kunststoff-Spritzgussteil oder -Frästeil hergestellt wird. Anschließend werden die Schenkel 12, 13 des Trägers 11 so weit unter einem spitzen Winkel angebogen, dass die Aufnahme 20 eingelegt werden kann. Danach werden die Schenkel 12, 13 vollends in ihre vertikale Lage umgebogen.

Die Figuren 7 und 8 zeigen ein zweites Ausführungsbeispiel eines Befestigungselements 40 mit ringförmigem Träger 41 aus einem metallischen Material, bspw. Stahl und scheibenförmiger Aufnahme 50 aus einem elektrisch isolierenden Material, bspw. Kunststoff. Der Träger 41 besteht aus einer Basis 42 und mindestens zwei, im Ausführungsbeispiel drei sich radial nach innen erstreckenden Halteelementen 43, 44, 45. Die Basis 42 ist im Ausführungsbeispiel kreisringförmig, kann aber auch bspw. oval, elliptisch oder mehreckig sein. Die Basis 42 weist eine Auflagefläche 46 für die Aufnahme 50 auf. Die Halteelemente 43, 44, 45 sind an die Basis 42 angeformt und bestehen im Ausführungsbeispiel aus sich axial erstreckenden Streben 47 mit radial nach innen gebogenen Klauen 48.

Die Aufnahme 50 weist im Ausführungsbeispiel eine an die Form der Basis 42 angepasste Außenkontur sowie eine Öffnung 55 zur Aufnahme eines Mutternkörpers 33 auf. Die Öffnung 55 ist im Ausführungsbeispiel an der Innenfläche mit zwei Materialerhöhungen 56 versehen, die die Klemmung des Mutternkörper 33 verstärken. Dieser Effekt kann so groß sein, dass auch Mutternkörper 33 ohne Bund Verwendung finden können, ohne dass während des Eindrehens des Schraubenbolzens der Mutternkörper 33 aus der Öffnung 55 herausgedrückt wird.

Ferner sind im Bereich der Streben 47 des Trägers 41 Ausnehmungen 51, 52, 53 vorgesehen, welche die Streben 47 umfassen. Die Ausnehmungen 51, 52, 53 sind so bemessen, dass zwischen ihnen und den Streben 47 ein Zwischenraum 54 verbleibt. Der Abstand zwischen der Unterseite der Klauen 48 und der Auflagefläche 46 des Trägers 41 ist wiederum so bemessen, dass zwischen den Klauen 48 und der Aufnahme 50 ein weiterer Zwischenraum 49 verbleibt. Aus dem Zusammenwirken des Zwischenraumes 49 und der Zwischenräume 54 resultiert wiederum die horizontale Bewegbarkeit der Aufnahme 50 im Träger 41. Das Ausmaß der horizontalen Bewegung der Aufnahme 50 wird durch die Streben 47 begrenzt, wobei die Seitenflächen der Ausnehmungen 51, 52, 53 als Anschlagflächen dienen.

Die Funktionsweise des Befestigungselements 40 entspricht der des Befestigungselements 10. Insbesondere ist durch die Begrenzung der horizontalen Bewegung der Aufnahme 50 sichergestellt, dass ein eingesetzter Mutternkörper 33 den Träger 41 nicht berührt. Ebenso ist der Mutternkörper 33 vor der Montage im Abstand zu dem zu befestigenden Bauteil gehalten.

Der Träger 41 des Befestigungselements 40 kann bspw. als Stanz- oder Drehteil, eine Aufnahme 50 aus Kunststoffmaterial bspw. durch Spritzgießen oder Fräsen hergestellt werden.

Das erfindungsgemäße Befestigungselement mit Mutternkörper stellt somit eine preisgünstige, vielseitig einsetzbare Käfigmutter dar.

## Patentansprüche

1. Befestigungselement (10;40) mit einem Träger (11, 41) und einer Aufnahme (20;50) für einen Mutternkörper (33), wobei der Träger (11;41) mindestens eine Auflagefläche (16, 17; 46) für die Aufnahme (20; 50) und mindestens ein die Aufnahme (20; 50) übergreifendes Halteelement (14, 15; 43, 44, 45) aufweist **dadurch gekennzeichnet, dass** die Aufnahme (20; 50) mit Spiel im Träger (11; 41) in der Ebene in allen Richtungen bewegbar gehalten ist.

2. Befestigungselement nach Anspruch 1, **dadurch gekennzeichnet, dass** der Träger (11; 41) aus einem Metallwerkstoff besteht.

3. Befestigungselement nach einem der vorhergehenden Ansprüche, **dadurch gekennzeichnet, dass** die Aufnahme (20; 50) aus einem Kunststoffmaterial besteht.

4. Befestigungselement nach einem der vorhergehenden Ansprüche, **dadurch gekennzeichnet, dass** der Träger (11) mindestens zwei Schenkel (12, 13) mit Auflageflächen (16, 17) für die Aufnahme (20) aufweist, wobei die Schenkel (12, 13) über stegförmige Halteelemente (14,15) miteinander verbunden sind.

5. Befestigungselement nach Anspruch 4, **dadurch gekennzeichnet, dass** die Aufnahme (20) mit Vorsprüngen (22, 23, 24, 25) versehen ist, die einerseits auf den Auflageflächen (16, 17) aufliegen und andererseits die stegförmigen Halteelemente (14, 15) untergreifen.

6. Befestigungselement nach einem der Ansprüche 1 bis 3, **dadurch gekennzeichnet, dass** der Träger (41) ringförmig ausgebildet und mit mindestens zwei sich radial nach innen erstreckenden Halteelementen (43, 44, 45) versehen ist.

7. Befestigungselement nach Anspruch 6, **dadurch gekennzeichnet, dass** die Aufnahme (50) scheibenförmig ausgebildet ist und korrespondierend zu den sich radial nach innen erstreckenden Halteelementen (43, 44, 45) an ihrem Außenumfang Ausnehmungen (51, 52, 53) aufweist.

8. Befestigungselement nach einem der vorhergehenden Ansprüche, **dadurch gekennzeichnet, dass** der Abstand zwischen der mindestens einen Auflagefläche (16, 17; 46) und dem mindestens einen Halteelement (14, 15; 43, 44, 45) der Dicke der Aufnahme (20; 50) angepasst ist.

9. Befestigungselement nach einem der vorhergehenden Ansprüche, **dadurch gekennzeichnet, dass** das Spiel der Aufnahme (20; 50) so bemessen ist, dass ein in die Aufnahme (20; 50) eingesetzter Mutternkörper (33) einen den elektrischen Kontakt zwischen Mutternkörper (33) und Träger (11; 41) verhindernden Abstand zum Träger (11; 41) aufweist.

10. Befestigungselement nach einem der vorhergehenden Ansprüche, **dadurch gekennzeichnet, dass** die Aufnahme (20; 50) eine Öffnung (30; 55) aufweist, die in Form und Größe dem Mutternkörper (33) angepasst ist, derart, dass der Mutternkörper (33) klemmend und bewegbar in der Aufnahme (20; 50) gehalten ist.

11. Befestigungselement nach Anspruch 10, **dadurch gekennzeichnet, dass** die Öffnung (30; 55) rund, langlochförmig oder mehreckig, bspw. sechseckig ausgebildet ist.

12. Befestigungselement nach Anspruch 10 oder 11, **dadurch gekennzeichnet, dass** an der Innenfläche der Öffnung (30; 55) mindestens eine Materialerhöhung (56) vorgesehen ist, die die Klemmung des Mutternkörpers (33) unterstützt.

13. Befestigungselement nach einem der vorhergehenden Ansprüche, **dadurch gekennzeichnet, dass** in der Aufnahme (20; 50) ein Mutternkörper (33) aufgenommen ist.

14. Befestigungselement nach Anspruch 13, **dadurch gekennzeichnet, dass** der Mutternkörper (33) mit einem radialen Bund (34) versehen ist.

15. Befestigungselement nach Anspruch 13, **dadurch gekennzeichnet, dass** der Mutternkörper (33) mit Vorsprüngen zur Sicherung der Mutter (30) in der Aufnahme (20; 50) versehen ist.

## Claims

1. Fastening element (10; 40) with a carrier (11; 41) and a receiver (20; 50) for a nut body (33), the carrier (11; 41) comprising at least one support surface (16, 17; 46) for the receiver (20; 50) and at least one holding element (14, 15; 43, 44, 45) overlapping the receiver (20; 50), **characterized in that** the receiver (20; 50) is held in the carrier (11; 41) with play and movably in all directions in the plane.

2. Fastening element according to Claim 1, **characterized in that** the carrier (11; 41) is made from a metal material.

3. Fastening element according to one of the preceding claims, **characterized in that** the receiver (20; 50) is made from a plastic material.

4. Fastening element according to one of the preceding claims, **characterized in that** the carrier (11) comprises at least two legs (12, 13) with support surfaces (16, 17) for the receiver (20), the legs (12, 13) being interconnected via web-shaped holding elements (14, 15).

5. Fastening element according to Claim 4, **characterized in that** the receiver (20) is provided with projections (22, 23, 24, 25) which on the one hand lie on the support surfaces (16, 17) and on the other hand extend under the web-shaped holding elements (14, 15).

6. Fastening element according to one of Claims 1 to 3, **characterized in that** the carrier (41) is of ring-shaped design and is provided with at least two radially inwardly extending holding elements (43, 44, 45).

7. Fastening element according to Claim 6, **characterized in that** the receiver (50) is of disc-shaped design and, corresponding to the radially inwardly extending holding elements (43, 44, 45), has recesses (51, 52, 53) on its outer periphery.

8. Fastening element according to one of the preceding claims, **characterized in that** the distance between the at least one support surface (16, 17; 46) and the at least one holding element (14, 15; 43, 44, 45) is adapted to the thickness of the receiver (20; 50).

9. Fastening element according to one of the preceding claims, **characterized in that** the play of the receiver (20; 50) is dimensioned in such a way that a nut body (33) inserted into the receiver (20; 50) is at a distance from the carrier (11; 41) which prevents electric contact between the nut body (33) and the carrier (11; 41).

10. Fastening element according to one of the preceding claims, **characterized in that** the receiver (20; 50) has an opening (30; 55) which is adapted in shape and size to the nut body (33) in such a way that the nut body (33) is held in a clamping and movable manner in the receiver (20; 50).

11. Fastening element according to Claim 10, **characterized in that** the opening (30; 55) is of round, slot-shaped or polygonal, for example hexagonal, design.

12. Fastening element according to Claim 10 or 11, **characterized in that** at least one raised material part (56), which supports the clamping of the nut body (33), is provided on the inner surface of the opening (30; 55).

13. Fastening element according to one of the preceding claims, **characterized in that** a nut body (33) is accommodated in the receiver (20; 50).

14. Fastening element according to Claim 13, **characterized in that** the nut body (33) is provided with a radial collar (34).

15. Fastening element according to Claim 13, **characterized in that** the nut body (33) is provided with projections for securing the nut (30) in the receiver (20; 50).

## Revendications

1. Elément de fixation (10; 40) avec un support (11; 41) et un réceptacle (20; 50) pour un corps d'écrou (33), le support (11; 41) présentant au moins une surface d'appui (16, 17; 46) pour le réceptacle (20; 50) et au moins un élément de maintien (14, 15; 43, 44, 45) recouvrant le réceptacle (20; 50), **caractérisé en ce que** le réceptacle (20; 50) est maintenu avec du jeu dans le support (11; 41), mobile dans toutes les directions dans le plan.

2. Elément de fixation selon la revendication 1, **caractérisé en ce que** le support (11; 41) est constitué d'un matériau métallique.

3. Elément de fixation selon l'une quelconque des revendications précédentes, **caractérisé en ce que** le réceptacle (20; 50) est constitué d'une matière plastique.

4. Elément de fixation selon l'une quelconque des revendications précédentes, **caractérisé en ce que** le support (11) présente au moins deux branches (12, 13) avec des surfaces d'appui (16, 17) pour le réceptacle (20), les branches (12, 13) étant reliées entre elles par des éléments de maintien (14, 15) en forme de traverses.

5. Elément de fixation selon la revendication 4, **caractérisé en ce que** le réceptacle (20) est doté de saillies (22, 23, 24, 25) qui, d'un côté, reposent sur les surfaces d'appui (16, 17) et, de l'autre côté, sont recouvertes par les éléments de maintien en forme de traverses (14, 15).

6. Elément de fixation selon l'une quelconque des revendications 1 à 3, **caractérisé en ce que** le support (41) est de configuration annulaire et est doté d'au moins deux éléments de maintien (43, 44, 45) s'étendant radialement vers l'intérieur.

7. Elément de fixation selon la revendication 6, **caractérisé en ce que** le réceptacle (50) est en forme de plaque et présente sur son pourtour extérieur des évidements (51, 52, 53) correspondant aux éléments de maintien (43, 44, 45) s'étendant radialement vers l'intérieur.

8. Elément de fixation selon l'une quelconque des revendications précédentes, **caractérisé en ce que** la distance entre l'au moins une surface d'appui (16, 17; 46) et l'au moins un élément de maintien (14, 15; 43, 44, 45) est adaptée à l'épaisseur du réceptacle (20; 50).

9. Elément de fixation selon l'une quelconque des revendications précédentes, **caractérisé en ce que** le jeu du réceptacle (20; 50) est dimensionné de sorte qu'un corps d'écrou (33) inséré dans le réceptacle (20; 50) présente une distance par rapport au support (11; 41) empêchant tout contact électrique entre le corps d'écrou (33) et le support (11; 41).

10. Elément de fixation selon l'une quelconque des revendications précédentes, **caractérisé en ce que** le réceptacle (20; 50) présente une ouverture (30; 55) qui est adaptée à la forme et à la taille du corps d'écrou (33), de sorte que le corps d'écrou (33) est maintenu coincé et mobile dans le réceptacle (20; 50).

11. Elément de fixation selon la revendication 10, **caractérisé en ce que** l'ouverture (30; 55) est de forme ronde, allongée ou polygonale, par exemple hexagonale.

12. Elément de fixation selon la revendication 10 ou 11, **caractérisé en ce qu'**il est prévu sur la face intérieure de l'ouverture (30; 55) au moins un relief (56) qui favorise le coincement du corps d'écrou (33).

13. Elément de fixation selon l'une quelconque des revendications précédentes, **caractérisé en ce qu'**un corps d'écrou (33) est logé dans le réceptacle (20; 50).

14. Elément de fixation selon la revendication 13, **caractérisé en ce que** le corps d'écrou (33) est doté d'un collet radial (34).

15. Elément de fixation selon la revendication 13, **caractérisé en ce que** le corps d'écrou (33) est doté de saillies pour bloquer l'écrou (30) dans le réceptacle (20; 50).
